# EUROPÄISCHE PATENTSCHRIFT

(11) **EP 0 385 079 B1**
(45) Veröffentlichungstag und Bekanntmachung des Hinweises auf die Patenterteilung: **07.12.1994**
(21) Anmeldenummer: 90101003.3
(22) Anmeldetag: 18.01.1990
(51) Int. Cl.: G02B 27/64

(54) **Ausblickbaugruppe für Kettenfahrzeuge**
Viewing system for chain vehicles
Système de visualisation pour véhicules en chaîne

(30) Priorität: 03.03.1989 DE 3906701
(43) Veröffentlichungstag der Anmeldung: 05.09.1990
(73) Patentinhaber: STN ATLAS Elektronik GmbH, D-28305 Bremen (DE)
(72) Erfinder: Duveneck, Uwe, Dipl.-Ing., D-2870 Delmenhorst (DE)

(56) Entgegenhaltungen:
- DE-A- 1 473 898
- DE-A- 1 944 189
- DE-A- 3 542 078
- DE-U- 8 902 515
- US-A- 3 446 980

## Beschreibung

Die Erfindung betrifft eine Ausblickbaugruppe, wie Zielfernrohr oder Rundblickperiskop, für Fahrzeuge, insbesondere gepanzerte Kampffahrzeuge, der im Oberbegriff des Anspruchs 1 definierten Gattung.

Bei einem bekannten Periskop für Kampfpanzer der eingangs genannten Art ist das mit Cassegrain-Fokus ausgerüstete Eingangsobjektiv in Form eines Spiegelteleskops im Innern des Panzerturms vertikal unterhalb des Ausblickspiegels angeordnet. Der Ausblickspiegel befindet sich in einem auch die Ausblicköffnung enthaltenden Spiegelkopf, der auf dem Panzerturm separat angeordnet ist. Kongruente Lichtdurchtrittsöffnungen an der Unterseite des Spiegelkopfs und im Panzerturm ermöglichen den Lichteinfall vom Ausblickspiegel zum Spiegelteleskop. Der Konkavspiegel des Spiegelteleskops weist eine zentrale Ausnehmung mit einem etwa dem Durchmesser des Konvexspiegels entsprechenden Durchmesser auf, durch welchen hindurch das vom Konvexspiegel nach Reflexion am Konkavspiegel seinerseits reflektierte Licht in den Brennpunkt des Spiegelteleskops fokussiert wird, um von dort mindestens einem optischen System zugeführt zu werden. Bei mehreren, in verschiedenen Wellenlängenbereichen arbeitenden optischen Systemen sind dem Spiegelteleskop Strahlteiler nachgeordnet, welche das fokussierte Lichtbündel spektral trennen und in getrennten Strahlengängen den einzelnen optischen Systemen zuführen. Zur Stabilisierung der Sichtlinie greift die Stabilisierungsvorrichtung am Ausblickspiegel an. Die in zwei orthogonalen Achsen arbeitende Stabilisierungsvorrichtung treibt dabei den Ausblickspiegel in vertikaler und horizontaler Schwenkbewegung an.

Ein solchermaßen aufgebautes Periskop benötigt einen relativ großflächigen Ausblickspiegel, um die volle Ausblicköffnung auf dem Konkavspiegel des Spiegelteleskops abzubilden. Großflächige Spiegel sind relativ schwer und besitzen damit ein relativ großes Trägheitsmoment. Aus Gründen einer hochgenauen Stabilisierung des Ausblickspiegels auch gegen abrupte Fahrzeugbewegungen in Horizontal- und Vertikalrichtung ist aber ein extrem kleines Trägheitsmoment erwünscht, um den Spiegel schneller nachführen zu können. Außerdem weist ein aufgrund der Forderung nach einem geringen Trägheitsmoment ausgelegter großflächiger Spiegel eine relativ geringe Steifigkeit auf, so daß es im rauhen Fahrbetrieb zu Schwingungen der Spiegelfläche kommt. Die Folge ist ein teilweise verzerrtes und unscharfes Bild.

Der Erfindung liegt die Aufgabe zugrunde, eine Ausblickbaugruppe der eingangs genannten Art zu schaffen, welche sich bei gleicher Ausblicköffnung und guter Bildqualität durch einen steifen Ausblickspiegel mit geringem Trägheitsmoment auszeichnet.

Die Aufgabe ist bei einer Ausblickbaugruppe der im Oberbegriff des Anspruchs 1 angegebenen Gattung erfindungsgemäß durch die Merkmale im Kennzeichenteil des Anspruchs 1 gelöst.

Durch die erfindungsgemäße Anordnung der Spiegel beiderseits des Ausblickspiegels wird das Spiegelteleskop unmittelbar hinter die Ausblicköffnung gelegt. Der Ausblickspiegel bildet den sog. Fangspiegel eines Spiegelteleskops mit seitlichem Cassegrain-Fokus. Da der Ausblickspiegel innerhalb der Brennweite des Spiegelteleskops im Strahlengang hinter dem Konvexspiegel liegt, ist das durch die Ausblicköffnung eintretende Lichtstrahlenbündel bereits weitgehend fokussiert. Zur Umlenkung des Lichtstrahlenbündels ist eine nur noch kleine Spiegelfläche erforderlich. Damit kann der Ausblickspiegel recht klein gemacht werden, so daß er das geforderte kleine Trägheitsmoment und die geforderte große Steifigkeit besitzt. Aufgrund der erfindungsgemäßen Verlagerung des Spiegelteleskops in den sog. Spiegelkopf ist eine raumfeste Stabilisierung der Teleskop-Spiegel mit Sichtlinie erforderlich, während der Ausblickspiegel mit einer 2:1-Untersetzung an die Vertikalbewegung der Teleskop-Spiegel angekoppelt ist. Insgesamt ergibt sich dadurch auch eine recht kompakte und raumsparende Ausbildung der Ausblickbaugruppe.

Vorteilhafte Ausführungsformen der erfindungsgemäßen Ausblickbaugruppe mit zweckmäßigen Weiterbildungen und Ausgestaltungen der Erfindung ergeben sich aus den weiteren Ansprüchen.

Gemäß einer bevorzugten Ausführungsform der Erfindung wird das Untersetzungsgetriebe aus drei Rollen mit zueinander parallelen Achsen und identischem Außendurchmesser aufgebaut. Die erste Rolle ist dabei starr mit der Abtriebswelle eines Vertikalantriebs verbunden, die zweite Rolle koaxial zur Schwenkachse des Ausblickspiegels angeordnet und undrehbar gehalten und die dritte Rolle auf einem mit der Schwenkachse des Ausblickspiegels starr verbundenen, von dieser radial wegstehenden Schwenkhebel drehbar angeordnet. Ein Draht verläuft ein- oder mehrmals von der ersten Rolle über die dritte zur zweiten Rolle und von dieser wieder zurück über die dritte Rolle zur ersten Rolle. Bei dieser konstruktiven Ausgestaltung des Untersetzungsgetriebes wird in einfacher Weise eine 2:1-Untersetzung zwischen der das Gehäuse für die Teleskop-Spiegel antreibenden Abtriebswelle des Vertikalantriebs und dem Ausblickspiegel geschaffen, welche die geforderten extrem kleinen Toleranzen im Untersetzungsverhältnis einhält, ohne daß diese hohe Präzision zu hohen Herstellungskosten führt, wie dies beispielsweise bei Zahnradgetrieben der Fall ist. Voraussetzung für eine exakte Untersetzung ist lediglich, daß die drei Rollen einen exakt gleichen Durchmesser aufweisen. Dies kann fertigungstechnisch in sehr einfacher Weise dadurch sichergestellt werden, daß die drei Rollen von einer auf einem gewünschten Durchmesser gedrehten Zylinderwalze abgestochen werden. Da die Größe des Durchmessers beim Untersetzungsverhältnis keine Rolle spielt, sondern nur eine Durchmesserdifferenz zwischen den Rollen, ist es unerheblich, mit welchem Toleranzwert der vorgegebene Walzendurchmesser eingehalten wird. Durch das Abstechen der Rollen von einer einstückigen Walze besitzen in jedem Fall die drei Rollen exakt gleiche Außendurchmesser.

Gemäß einer weiteren Ausführungsform der Erfindung ist ein weiterer Konvexspiegel vorgesehen, der in den optischen Strahlengang zwischen Konvex- und Ausblickspiegel eingeschoben werden kann. Infolge der dadurch möglichen Änderung der Brennweite kann der Feldwinkel des Spiegelteleskops, auch Vergrößerung des Objektivs genannt, verändert werden, so daß ein vergrößerter Bildausschnitt bei kürzerer Entfernung auf dem optischen System abgebildet wird.

Eine weitere Vergrößerungswirkung der Ausblickbaugruppe erhält man gemäß einer weiteren Ausführungsform der Erfindung durch Ausschwenken des oder der Konvexspiegel aus dem Strahlengang und Einsetzen eines Objektivs mit entsprechemdem Feldwinkel in den Strahlengang, und zwar in Lichteinfallsrichtung gesehen hinter dem Ausblickspiegel. In diesem Fall trifft das über die Ausblicköffnung einfallende Lichtbündel direkt auf den Ausblickspiegel und wird von dort zum eingeschobenen Objektiv umgelenkt. Die Teleskop-Spiegel des Spiegelteleskops sind außer Funktion.

Die Erfindung ist anhand eines in der Zeichnung dargestellten Ausführungsbeispiels im nachfolgenden näher beschrieben. Es zeigen jeweils in schematischer Darstellung:
- Fig. 1: eine in dem Turm eines Kampfpanzers integrierte Ausblickbaugruppe,
- Fig. 2: eine perspektivische Darstellung eines Untersetzungsgetriebes in der Ausblickbaugruppe in Fig. 1.

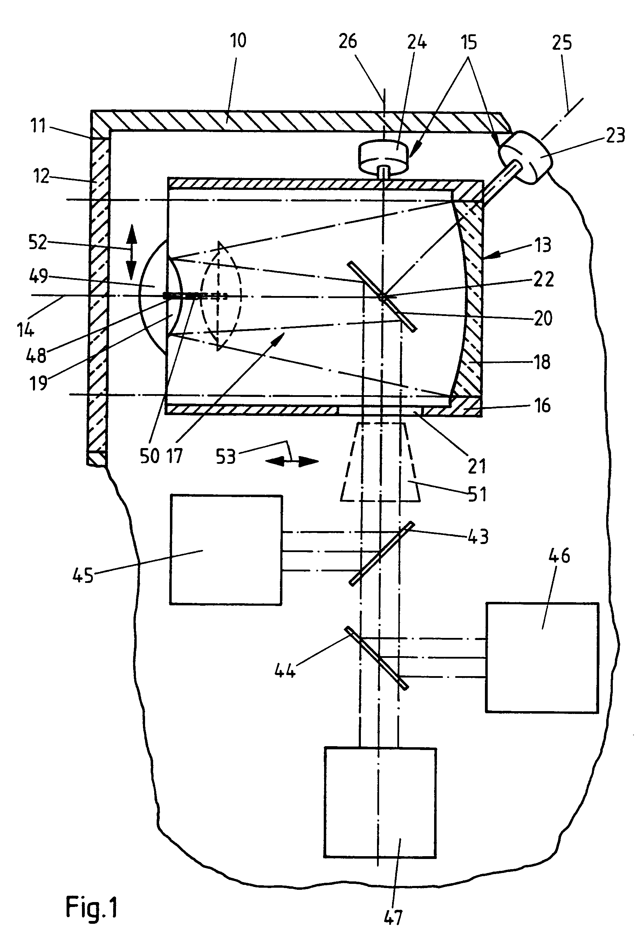

Die in Fig. 1 nur prinzipiell und ohne konstruktive Details dargestellte Ausblickbaugruppe kann ein sog. Zielfernrohr sein, das in dem Turm 10 eines Kampfpanzers angeordnet ist. Der Turm 10 steht hier als konkretes Beispiel für einen beliebigen Fahrzeugaufbau, in welchem die Ausblickbaugruppe untergebracht sein kann. Im Turm 10 ist eine sich im wesentlichen vertikal erstreckende Ausblicköffnung 11 vorgesehen, die mit einem lichtdurchlässigen Fenster 12 verschlossen ist. Hinter dem Fenster 12 ist ein sog. Spiegelkopf 13 angeordnet, der zur Stabilisierung einer durch die Ausblicköffnung 11 hindurchgehenden Sicht- oder Visierlinie 14 schwenkbar gelagert ist und von einer Stabilisierungsvorrichtung 15 in zwei orthogonalen Achsen angetrieben wird.

Der Spiegelkopf 13 besitzt ein zylindrisches Gehäuse 16, in dem ein sog. Spiegelteleskop 17 mit seitlichem Cassegrain-Fokus untergebracht ist. In bekannter Weise besteht ein solches Spiegelteleskop 17 aus einem Konkavspiegel 18, einem Konvexspiegel 19 und einem sog. Fangspiegel 20, der das auf ihn auftreffende Lichtstrahlenbündel seitlich durch eine Lichtdurchtrittsöffnung 21 aus dem Gehäuse 16 ausblendet. Der Fangspiegel oder Umlenkspiegel 20 ist um eine horizontale Schwenkachse 22 schwenkbar im Gehäuse 16 gelagert und bildet den sog. Ausblickspiegel 20 der Ausblickbaugruppe. Konkavspiegel 18 und Konvexspiegel 19 sind dabei koaxial zur Sichtlinie 14 vor und hinter dem Ausblickspiegel 20 angeordnet, dessen Schwenkachse 22 die Sichtlinie 14 schneidet. Dabei ist der Konkavspiegel 18 an der von der Ausblicköffnung 11 abgekehrten Stirnseite des zylindrischen Gehäuse 16, dieses abschließend, angeordnet, während der im Durchmesser kleinere Konvexspiegel 19 sich nahe der offenen Stirnseite des zylindrischen Gehäuses 16 befindet.

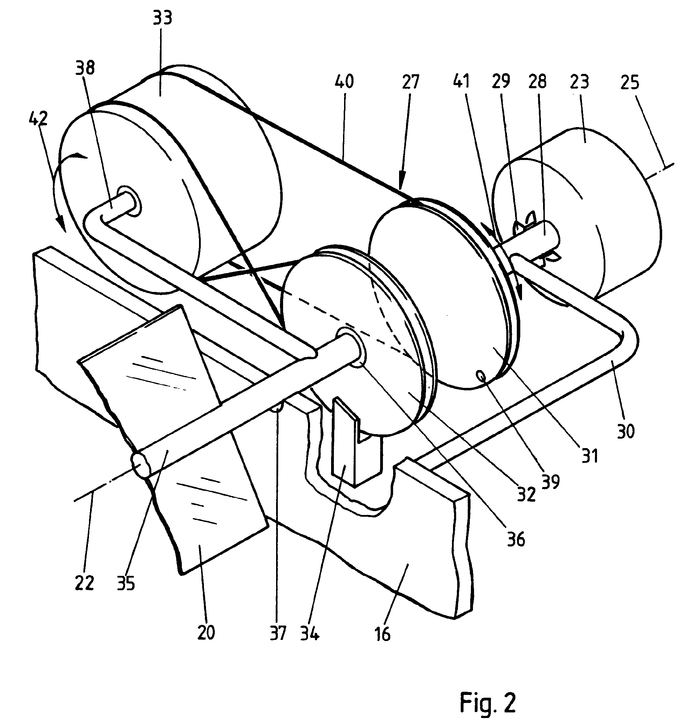

Zur Stabilisierung der Sichtlinie 14 weist die Stabilisierungsvorrichtung 15 einen Vertikalantrieb 23 und einen Horizontalantrieb 24 auf. Der Horizontalantrieb 24 dreht das Gehäuse 16 um eine Vertikalachse 26, während der Vertikalantrieb 23 das Gehäuse 16 um eine Horizontalachse 25 schwenkt. Die Horizontalachse 25 fluchtet mit der Schwenkachse 22 des Ausblickspiegels 20, während die Vertikalachse 26 die Schwenkachse 22 und damit die Horizontalachse 25 in der Mitte des Ausblickspiegels 20 schneidet. Die Schwenkbewegung des Ausblickspiegels 20 ist über ein in Fig. 2 dargestelltes 2:1-Untersetzungsgetriebe 27 von der Vertikalverstellung des Gehäuses 16 abgenommen. Das bedeutet, daß der Ausblickspiegel 20 sich um einen Schwenkwinkel α/2 verschwenkt, wenn das Gehäuse 16 mit darin fest angeordneten Konkav- und Konvexspiegeln 18, 19 von dem Vertikalantrieb 23 um den Schwenkwinkel α in Elevation gedreht wird.

Wie aus Fig. 2 ersichtlich ist, weist das Untersetzungsgetriebe 27 drei mit parallelen Achsen zueinander angeordnete Rollen 31, 32, 33 auf. Die erste Rolle 31 ist starr mit der Abtriebswelle 28 des Vertikalantriebs 23 verbunden, die mittels eines Lagers 29 innerhalb des Turms 10 raumfest gelagert ist. Mit der Abtriebswelle 28 ist drehfest ein Bügel 30 verbunden, der an dem Gehäuse 16 angreift und dieses bei Drehen der Abtriebswelle 28 um die Horizontalachse 25 schwenkt. Von dem Gehäuse 16 ist in Fig. 2 nur eine Seitenwand teilweise zu sehen. Die zweite Rolle 32 ist koaxial zur Schwenkachse 22 des Ausblickspiegels 20 angeordnet und umdrehbar an einem der Lagerung des Horizontalantriebs 24 dienenden Seitenrahmen gehalten, der in Fig. 2 mit 34 symbolisch angedeutet ist. Der Ausblickspiegel 20 ist auf einer mit der Schwenkachse 22 koaxialen Schwenkwelle 35 befestigt, die in einem Lager 36 in der zweiten Rolle 32 drehbar gehalten ist. Das Gehäuse 16 sitzt über Lager 37 drehbar auf der Schwenkwelle 35. Die dritte Rolle 33 ist auf einem winkelförmigen Schwenkhebel 38 drehbar angeordnet, der radial von der Schwenkwelle 35 wegstrebt und mit dieser starr verbunden ist. An der ersten Rolle 31 ist im Punkt 39 ein Draht 40 befestigt und verläuft von hier über den Umfang der ersten Rolle 31, über den Umfang der dritten Rolle 33 bis zur zweiten Rolle 32 und von hier über deren Umfang wiederum über die dritte Rolle 33 zurück zur ersten Rolle 31, um schließlich wieder am Punkt 39 befestigt zu sein. Diesen Verlauf kann der Draht 40 mehrmals nehmen. Die Durchmesser aller drei Rollen 31 bis 33 sind exakt gleich. Dreht sich nunmehr die Abtriebswelle 28 des Vertikalantriebs 23 - wie durch Pfeil 41 angedeutet ist - um einen Drehwinkel α, so wird über den Bügel 30 das Gehäuse 16 in den Lagern 37 um den gleichen Winkel α verdreht. Durch die Drahtkopplung der drei Rollen 31 bis 33 wird dabei der Schwenkhebel 38 in Richtung Pfeil 42 um α/2 gleichsinnig geschwenkt. Über den Schwenkhebel 38 wird die Schwenkwelle 35 des Ausblickspiegels 20 und damit letzterer um α/2 verdreht.

Das vom Ausblickspiegel 20 umgelenkte, durch die Lichtdurchtrittsöffnung 21 hindurchtretende Strahlenbündel trifft auf zwei Strahlteiler 43, 44, die das Licht spektral teilen und jeweils einem optischen Sichtsystem 45 bis 47 zuführen. Das Sichtsystem 45 ist ein Infrarot-Nachtsichtsystem oder Wärmebildgerät und das Sichtsystem 46 ein Tagessichtsystem. Das Sichtsystem 47 kann ein Laserentfernungsmesser sein. Zwei Randstrahlen sowie die Strahlenachse des über die Ausblickoptik einfallenden Lichtstrahlenbündels sind in Fig. 1 strichliniert eingezeichnet.

Zur Variation der Vergrößerung der Ausblickbaugruppe sind zwei Maßnahmen getroffen. Zum einen ist ein weiterer Konvexspiegel 49 vorgesehen, der zur Änderung der Vergrößerung in den Strahlengang zwischen dem Konvexspiegel 19 und dem Ausblickspiegel 20 eingeschoben werden kann. Dadurch wird die Brennweite des Spiegelteleskops 17 verringert und der Feldwinkel des Spiegelteleskops 17 vergrößert. Bei reduzierter Bildentfernung wird ein vergrößerter Bildausschnitt in den optischen Systemen 45 bis 47 abgebildet. Eine konstruktiv einfache Lösung des Einschiebens des weiteren Konvexspiegels 49 wird dadurch erzielt, daß die beiden Konvexspiegel 19, 49 um 180° zueinander gedreht auf einem Spiegelträger 48 angeordnet sind. Der Spiegelträger 48 ist um eine Schwenkachse 50 schwenkbar, die mit Abstand zum ersten Konvexspiegel 19 zum Ausblickspiegel 20 hin im Gehäuse 16 angeordnet ist. Um diese Schwenkachse 50 kann der Spiegelträger 48 in zwei Raststellungen geschwenkt werden. In Fig. 1 ist die erste Raststellung ausgezogen und die zweite Raststellung strichliniert dargestellt. In der ersten Raststellung ist der Konvexspiegel 19 und in der zweiten Raststellung der Konvexspiegel 49 wirksam.

Wird beispielsweise in der ersten Raststellung mit dem Konvexspiegel 19 eine Vergrößerung von 1° erreicht, was bedeutet, daß der Feldwinkel des Spiegelteleskops 1° ist, so wird in der zweiten Raststellung des Spiegelträgers 48 mit dem weiteren Konvexspiegel 49 beispielsweise eine Vergrößerung von 3° erzielt.

Eine weitere Vergrößerung wird durch die zweite Maßnahme erzielt, indem der Spiegelträger 48 mit den beiden Konvexspiegeln 19, 49 aus dem Strahlengang ausschwenkbar und ein Objektiv 51 mit gewünschtem Feldwinkel in den Strahlengang einschiebbar ist. Das Objektiv 51 wird dabei in Lichteinfallsrichtung gesehen hinter der Lichtdurchtrittsöffnung 21 im Gehäuse 16 eingeschoben. Das Objektiv 51 ist schematisch strichliniert angedeutet. Die Aus- und Einschwenbarkeit von Spiegelträger 48 und Objektiv 51 ist durch Doppelpfeile 52 bzw. 53 symbolisiert. Bei den vorgenannten Vergrößerungen des Spiegelteleskops 17 wird der Feldwinkel des Objektivs 51 beispielsweise zweckmäßigerweise 10° gewählt. Das Spiegelteleskop 17 ist in diesem Fall unwirksam.

Die Erfindung ist nicht auf das vorstehend beschriebene Ausführungsbeispiel beschränkt. So kann die Ausblickbaugruppe auch ein Rundblickpersikop sein. Der Spiegelkopf 13 ist dann in einem separaten, Ausblicköffnung 11 und Fenster 12 enthaltenden, vom Turm 10 getrennten Zusatzgehäuse angeordnet, das um 360° im Azimut drehbar auf dem Panzerturm 10 aufgesetzt ist. Das Zusatzgehäuse und der Turm 10 müssen dann zur Lichtdurchtrittsöffnung 21 kongruente Öffnungen für den Strahlengang aufweisen.

## Patentansprüche

1. Ausblickbaugruppe, wie Zielfernrohr oder Rundblickperiskop für Fahrzeuge, insbesondere gepanzerte Kampffahrzeuge, mit einer durch eine Ausblicköffnung hindurchtretenden Visier- oder Sichtlinie, mit einer Stabilisierungsvorrichtung zur raumfesten stabilisierung der Visier- oder Sichtlinie, ist, mit mindestens einem optischen System, z.B. Tagessichtsystem, Nachtsichtsystem, Wärmebildsystem oder Laserentfernungsmesser, mit einem zwischen Ausblicköffnung und optischem System angeordneten schwenkbaren Umlenkspiegel zum Umlenken eines durch die Ausblicköffnung entlang der Sicht- oder Visierlinie einfallenden Lichtbündels zum optischen System und mit einem das Lichtbündel auf das optische System fokussierenden Spiegelteleskop mit Cassegrain, das einen Konkavspiegel und einen im Abstand davon koaxial fest zum Konkavspiegel angeordneten Konvexspiegel aufweist, dadurch gekennzeichnet, daß der Umlenkspiegel (20) zwischen den beiden Spiegeln (18,19) des Spiegelteleskops (17) derart angeordnet ist, daß der Konkavspiegel (18) auf der von der Ausblicköffnung (11) abgekehrten Seite und der Konvexspiegel (19) auf der der Ausblicköffnung (11) zugekehrten Seite des Umlenkspiegels (20) liegt, und daß zur Stabilisierung der Sichtlinie (14) die Stabilisierungsvorrichtung (15) auf die zueinander fest ausgerichteten Spiegel (18,19) des Teleskops (17) derart einwirkt daß die Spiegel (18,19) in koxialer Ausrichtung zur Sicht- oder Visierlinie gehalten werden, und daß die Schwenkbewegung des Umlenkspiegels (20) über ein 2:1-Untersetzungsgetriebe (27) von der Vertikalverstellung des Teleskops (17) abgeleitet ist.

2. Ausblickbaugruppe nach Anspruch 1, dadurch gekennzeichnet, daß die Teleskop-Spiegel (18, 19) in einem Gehäuse (16) untergebracht sind, das eine seitliche Lichtaustrittsöffnung (21) zum Durchtritt des von dem Ausblickspiegel (20) umgelenkten Lichtbündels aufweist, und daß die Stabilisierungsvorrichtung (15) zwei Antriebe (24, 25) zum Antrieb des Gehäuses (16) in Vertikal- und Horizontalrichtung aufweist, wobei die Horizontalachse (25) mit der Schwenkachse (22) des Umlenkspiegels (20) fluchtet und die Vertikalachse (26) die Schwenkachse (22) in Spiegelmitte schneidet, und daß der Umlenkspiegel (20) über das Untersetzungsgetriebe (27) an den Vertikalantrieb (23) angekoppelt ist.

3. Ausblickbaugruppe nach Anspruch 2, dadurch gekennzeichnet, daß das Untersetzungsgetriebe (27) drei mit parallelen Achsen zueinander angeordnete Rollen (31 bis 33) mit identischem Außendurchmesser, von denen die erste Rolle (31) starr mit der Abtriebswelle (28) des Vertikalantriebs (23) verbunden ist, die zweite Rolle (32) koaxial zur Schwenkachse (22) des Ausblickspiegels (20) angeordnet und undrehbar gehalten ist und die dritte Rolle (33) auf einem mit der Schwenkachse (22) starr verbundenen, von dieser radial wegstrebenden Schwenkhebel (38) drehbar sitzt, und einen über die Umfangsflächen der Rollen (31 bis 33) verspannten Draht (40) aufweist, der von der ersten Rolle (31) über die dritte Rolle (33) zur zweiten Rolle (32) und von dieser wieder über die dritte Rolle (33) zurück zur ersten Rolle (31) einmal oder mehrmals verläuft.

4. Ausblickbaugruppe nach einem der Ansprüche 1 bis 3, dadurch gekennzeichnet, daß in den optischen Strahlengang zwischen Konvexspiegel (19) und Umlenkspiegel (20) ein weiterer Konvexspiegel (49), den ersten abschattend, einschiebbar ist.

5. Ausblickbaugruppe nach Anspruch 4, dadurch gekennzeichnet, daß die beiden Konvexspiegel (19, 49) um 180° zueinander gedreht auf einem Spiegelträger (48) angeordnet sind, der um eine mit Abstand vom ersten Konvexspiegel (19) zum Umlenkspiegel (20) hin versetzte horizontale oder vertikale Schwenkachse (50) um 180° in eine zweite Raststellung schwenkbar ist.

6. Ausblickbaugruppe nach Anspruch 4 oder 5, dadurch gekennzeichnet, daß der weitere Konvexspiegel (49) so ausgebildet ist, daß das mit dem weiteren Konvexspiegel (49) gebildete Spiegelteleskop (17) einen Feldwinkel hat, der größer ist als der Feldwinkel des mit dem ersten Konvexspiegel (19) gebildeten Spiegelteleskops (17).

7. Ausblickbaugruppe nach einem der Ansprüche 1 bis 6, dadurch gekennzeichnet, daß der oder die Konvexspiegel (19, 49) aus dem optischen Strahlengang aussschiebbar ausgebildet ist bzw. sind und daß in den optischen Strahlengang in Lichteinfallsrichtung hinter dem Umlenkspiegel (20) ein Objektiv (51) mit einem gegenüber dem Spiegelteleskop (17) größeren Feldwinkel einschiebbar ist.

## Claims

1. Viewing system, such as a sighting telescope or panoramic periscope for vehicles, in particular armoured combat vehicles, with a sighting or viewing line passing through a viewing aperture, with a stabilising device for fixed stabilisation of the sighting or viewing line, with at least one optical system, e.g. a day viewing system, night viewing system, thermal imaging system or laser ranging system, with a swivelling deflection mirror arranged between the viewing aperture and the optical system for deflection of a bundle of light entering through the viewing aperture passing along the sighting or viewing line to the optical system, and with a Cassegrain reflecting telescope, which has a concave mirror and a convex mirror arranged at a distance from the concave mirror and coaxially fixed thereto, for focussing the bundle of light onto the optical system, characterised in that the deflection mirror (20) is arranged between the two mirrors (18, 19) of the reflecting telescope (17) in such a way that the concave mirror (18) lies on the side of the deflection mirror (20) averted from the viewing aperture (11) and convex mirror (19) lies on the side facing the viewing aperture (11); and that to stabilise the viewing line (14), the stabilising device (15) acts on the mirrors (18, 19) of the telescope (17), which are fixedly aligned to one another, in such a way that the mirrors (18, 19) are held in coaxial alignment with the viewing or sighting line; and that the swivelling movement of the deflection mirror (20) is directed by the vertical adjustment of the telescope (17) by means of a 2:1 reducing gear (27).

2. Viewing system according to Claim 1, characterised in that the telescope mirrors (18, 19) are housed in a housing (16), which has a lateral light exit aperture (21) for the bundle of light deflected by the deflection mirror (20) to pass through; and that the stabilising device (15) has two drives (24, 25) for actuation of the housing (16) in vertical and horizontal direction, in which case the horizontal axis (25) runs flush with the swivel axis (22) of the deflection mirror (20) and the vertical axis (26) intersects the swivel axis (22) in the centre of the mirror; and that the deflection mirror (20) is coupled to the vertical drive (23) via the reducing gear (27).

3. Viewing system according to Claim 2, characterised in that the reducing gear (27) has three rollers (31 to 33) arranged with axes parallel to one another and with identical outside diameters, of which the first roller (31) is rigidly connected to the output shaft (28) of the vertical drive (23), the second roller (32) is arranged coaxially to the swivel axis (22) of the deflection mirror (20) and is non-rotatably mounted, and the third roller (33) is rotatably mounted on a swivelling lever (38), which is rigidly connected to the swivel axis (22) and presses radially away therefrom, and the reducing gear (27) has a wire (40), which is spanned over the peripheral surfaces of the rollers (31 to 33) and runs from the first roller (31) over the third roller (33) to the second roller (32) and from this back over the third roller (33) to the first roller (31) once or several times.

4. Viewing system according to one of Claims 1 to 3, characterised in that an additional convex mirror (49) shading the first convex mirror may be inserted into the optical path between the convex mirror (19) and the deflection mirror (20).

5. Viewing system according to claim 4, characterised in that the two convex mirrors (19, 49) are turned 180° to one another and are arranged on a mirror support (48), which may be swivelled 180° into a second resting position around a horizontal or vertical swivel axis (50) at a distance from the convex mirror (19) and shifted towards the deflection mirror (20).

6. Viewing system according to Claim 4 or 5, characterised in that the structure of the additional convex mirror (49) is such that the reflecting telescope (17) formed with the additional convex mirror (49) has a field angle which is greater than the field angle of the reflecting telescope (17) formed with the first convex mirror (19).

7. Viewing system according to one of Claims 1 to 6, characterised in that the convex mirror or mirrors (19, 49) is or are constructed so that it or they can slide out of the optical path, and that a lens (51) with a greater field angle than that of the reflecting telescope (17) may be slid behind the deflection mirror (20) into the optical path in the direction of light incidence.

## Revendications

1. Ensemble structurel de visée, tel que lunette de visée ou périscope panoramique, pour véhicule, notamment véhicule blindé de combat, comprenant une ligne de pointage ou d'observation, qui pénètre par une ouverture de visée, un dispositif de stabilisation, qui sert à la stabilisation spatiale de la ligne de pointage ou d'observation, au moins un système optique, par exemple un système de visée diurne, système de visée nocturne, système de formation d'image par rayonnement thermique ou appareil de mesure de distance laser, un miroir de renvoi, monté d'une manière pivotante, disposé entre l'ouverture de visée et le système optique et servant à renvoyer vers le système optique un faisceau lumineux qui pénètre par l'ouverture de visée le long de la ligne de pointage ou d'observation, et un télescope à miroirs à foyer Cassegrain, qui focalise le faisceau lumineux sur le système optique et comprend un miroir concave et un miroir convexe disposé à demeure suivant le même axe que le miroir concave et à une certaine distance de ce dernier, caractérisé en ce que le miroir de renvoi (20) est disposé entre les deux miroirs (18, 19) du télescope à miroirs (17) d'une façon telle que le miroir concave (18) est disposé du côté du miroir de renvoi (20) qui est situé à l'opposé de l'ouverture de visée (11) et le miroir convexe (19) est disposé du côté du miroir de renvoi (20) qui fait face à l'ouverture de visée (11) et en ce que, pour la stabilisation de la ligne de visée (14), le dispositif de stabilisation (15) agit sur les miroirs (18, 19) du télescope (17) qui sont orientés d'une manière fixe l'un vis-à-vis de l'autre, d'une façon telle que ces miroirs (18, 19) sont maintenus suivant un alignement coaxial vis-à-vis de la ligne de pointage ou d'observation et que le mouvement de pivotement du miroir de renvoi (20) est déduit du déplacement vertical du télescope (17) par l'intermédiaire d'un mécanisme (27) de démultiplication 2:1.

2. Ensemble structurel de visée selon la revendication 1, caractérisé en ce que les miroirs (18, 19) du télescope sont montés dans un boîtier (16) qui comporte une ouverture latérale de sortie de lumière (21) permettant le passage du faisceau lumineux dévié par le miroir de visée (20), en ce que- le dispositif de stabilisation (15) comprend deux dispositifs moteurs (24, 25) servant à-l'entraînement du boîtier (16) suivant la direction verticale et suivant la direction horizontale, l'axe horizontal (25) étant situé dans l'alignement de l'axe de pivotement (22) du miroir de renvoi (20) et l'axe vertical (26) recoupant l'axe de pivotement (22) au milieu du miroir, et en ce que le miroir de renvoi (20) est accouplé au dispositif moteur d'entraînement vertical (23) par l'intermédiaire du mécanisme de démultiplication (27).

3. Ensemble structurel de visée selon la revendication 2, caractérisé en ce que le mécanisme de démultiplication (27) comprend trois tambours (31 à 33), disposés avec leurs axes parallèles et ayant des diamètres extérieurs identiques, parmi lesquels le premier tambour (31) est solidaire à demeure de l'arbre de sortie (28) du dispositif moteur d'entraînement vertical (23), le deuxième tambour (32) a son axe disposé suivant l'axe de pivotement (22) du miroir de renvoi (20) et est maintenu immobile en rotation et le troisième tambour (33) est monté rotatif sur un levier pivotant (38) solidaire à demeure de l'axe de pivotement (22) et s'écartant radialement de ce dernier, et un fil métallique (40) qui passe sur les surfaces périphériques des tambours (31 à 33) et qui passe une ou plusieurs fois du premier tambour (31) au deuxième tambour (32) en passant par le troisième tambour (33), puis revient du deuxième tambour (32) au premier tambour (31) en passant de nouveau sur le troisième tambour (33).

4. Ensemble structurel de visée selon l'une des revendications 1 à 3, caractérisé en ce qu'un second miroir convexe (49) peut être inséré, en masquant le premier miroir convexe, dans le trajet optique du faisceau entre le miroir convexe (19) et le miroir de renvoi (20).

5. Ensemble structurel de visée selon la revendication 4, caractérisé en ce que les deux miroirs convexes (19, 49) sont disposés, en étant décalés en rotation de 180° l'un vis-à-vis de l'autre, sur un porte-miroirs (48) qui est agencé de façon à pouvoir pivoter de 180° autour d'un axe de pivotement horizontal ou vertical (50) qui est décalé à une certaine distance du premier miroir convexe (19) en direction du miroir de renvoi (20), de façon à pouvoir passer dans une seconde position d'enclenchement.

6. Ensemble structurel de visée selon la revendication 4 ou 5, caractérisé en ce que le second miroir convexe (49) est agencé d'une façon telle que le télescope à miroirs (17) formé avec ce second miroir convexe (49) a un angle de champ qui est supérieur au télescope à miroirs (17) formé avec le premier miroir convexe (19).

7. Ensemble structurel de visée selon l'une des revendications 1 à 6, caractérisé en ce que le ou les miroirs convexes (19, 49) est agencé ou sont agencés de façon à pouvoir être déplacé ou déplacés hors du trajet optique du faisceau et en ce qu'un objectif (51), ayant un angle de champ supérieur à celui du télescope à miroirs (17), peut être inséré dans le trajet optique du faisceau en aval du miroir de renvoi (20) suivant la direction d'arrivée de la lumière.
